# NEUE EUROPÄISCHE PATENTSCHRIFT

(11) **EP 3 275 399 B2**
(45) Veröffentlichungstag und Bekanntmachung des Hinweises auf die Entscheidung über den Einspruch: **21.07.2021**
(45) Hinweis auf die Patenterteilung: 12.09.2018
(21) Anmeldenummer: 16181277.1
(22) Anmeldetag: 26.07.2016
(51) Int. Cl.: A46B 9/06

(54) **INTERDENTALREINIGUNGSELEMENT**
INTERDENTAL CLEANING ELEMENT
ÉLEMENT DE NETTOYAGE INTERDENTAIRE

(43) Veröffentlichungstag der Anmeldung: 31.01.2018
(73) Patentinhaber: M+C Schiffer GmbH, 53577 Neustadt-Wied (DE)
(72) Erfinder: Stock, Marco, 56112 Lahnstein (DE)
(74) Vertreter: Grünecker Patent- und Rechtsanwälte PartG mbB

(56) Entgegenhaltungen:
- EP-A1- 0 568 400
- EP-A1- 2 324 796
- WO-A2-2011/023831
- DE-A1- 19 962 188
- DE-A1-102012 002 499
- DE-U1-202012 008 171
- JP-A- H0 923 928
- KR-A- 20060 017 721
- US-A- 2 754 833
- US-A- 3 861 406
- US-A1- 2004 187 887
- US-A1- 2014 251 367

## Beschreibung

Die vorliegende Erfindung betrifft ein Interdentalreinigungselement mit einer stabförmigen Basis und im Wesentlichen rechtwinklig von der Basis abgehenden Reinigungselementen, wobei erste und zweite Reinigungselemente an der Basis befestigt sind, das erste Reinigungselement ein Borstenfilament aus verstrecktem Kunststoff, z.B. PA, PBT, PE und PTFE, ist und das zweite Reinigungselement aus einem Zahnseidenfadenmaterial besteht. Ein solches Interdentalreinigungselement ist aus der US 3 861 406 A bekannt.

Die ersten und zweiten Reinigungselemente des Interdentalreinigungselements aus der US 3 861 406 A sind auf gegenüberliegenden Seiten der stabförmigen Basis angeordnet. Dies hat den Nachteil, dass die beiden Reinigungselemente nicht gleichzeitig an der zur Anwendung vorgesehenen Stelle angreifen können.

Der vorliegenden Erfindung liegt das Problem zugrunde, ein hinsichtlich seines Reinigungsverhaltens verbessertes Interdentalreinigungselement anzugeben.

Zur Lösung dieser Aufgabe wird mit der vorliegenden Erfindung ein Interdentalreinigungselement mit den Merkmalen von Anspruch 1 angegeben. Dieses Interdentalreinigungselement hat in an sich bekannter Weise eine stabförmige Basis, von der im Wesentlichen rechtwinklig Reinigungselemente abgehen. Bei dem erfindungsgemäßen Interdentalreinigungselement sind indes zumindest zwei unterschiedliche Interdentalreinigungselemente an der Basis befestigt, nämlich zumindest ein erstes und zumindest ein zweites Reinigungselement. Das erste Reinigungselement ist ein herkömmliches Borstenfilament. Dieses Borstenfilament besteht üblicherweise aus einem verstreckten Polyamid. Das Borstenfilament kann auch aus PBT bestehen. Das Borstenfilament ist ein herkömmliches Filament, wie es üblicherweise an Interdentalreinigungselementen heutzutage verwendet wird. Es kommt danach weniger auf die stoffliche Beschaffenheit an als auf den Umstand, dass dieses Filament als Monofilament ausgebildet und für sich alleine oder zusammen mit einigen wenigen, regelmäßig nicht mehr als vier Filamenten gemeinschaftlich an einem Punkt in Längsrichtung der stabförmigen Basis befestigt ist.

Das erfindungsgemäße Interdentalreinigungselement hat ferner zumindest ein zweites Reinigungselement. Dieses zweite Reinigungselement besteht aus einem Zahnseidenfaden. Zahnseide besteht heutzutage üblicherweise aus Kunststoffen, also Polyamid oder Polyethylen oder Seide, und kann in gewachster oder ungewachster Ausführung bzw. mit einer PTFE-Beschichtung versehen sein. Die heute vertriebene Zahnseide kann auch mit Fluorid oder Pfefferminzgeschmack imprägniert sein. Die heute üblichen Zahnseidenmaterialien können zur Verwirklichung der erfindungsgemäßen Lösung zum Einsatz kommen. Zahnseide ist im Gegensatz zu den Borstenfilamenten nicht als Monofilament ausgebildet. Vielmehr wird das in den erfindungsgemäßen Interdentalreinigungselement zum Einsatz kommende Zahnseidenmaterial als Faden mit der stabförmigen Basis befestigt, wobei jeder der Fäden aus einer Vielzahl von einzelnen Feinstfäden zusammengesetzt ist, die beispielsweise miteinander verdrillt oder verwoben sind. Ein solcher aus Feinstfäden zusammengesetzter Zahnseidenfaden fächert sich bei der Benutzung auf, sodass die einzelnen Feinstfäden des Zahnseidenfadenmaterials bei der Benutzung des Interdentalreinigungselementes in dem Interdentalraum multiple Angriffsflächen bieten, die interdental wirken und somit zu einer verbesserten Reinigung in den Zahnzwischenräumen führen. Das Zahnseidenfadenmaterial kann einen im Wesentlichen rotationssymmetrischen Querschnitt haben, wie dies bei Zahnseide heutzutage üblich ist. Es wird aber auch möglich, ein bandförmiges Fadenmaterial als Zahnseidenfadenmaterial im Sinne der vorliegenden Erfindung einzusetzen, welches einen eher länglichen Querschnitt hat.

Das erfindungsgemäße Interdentalreinigungselement zeichnet sich dadurch aus, dass die stabförmige Basis gegeneinander verdrillte Drahtelemente aufweist, die zwischen sich die ersten und zweiten Reinigungselemente klemmen.

Gegeneinander verdrillte Metalldrähte werden beispielsweise in der DE 10 2012 002 499 A1 dazu eingesetzt herkömmliche Filamente, die zur Ausbildung von Borstenbündeln bei Zahnbürsten allgemeine Verbreitung gefunden haben, einzuschließen. Bei diesen Borstenfilamenten handelt es sich üblicherweise um Monofilamente aus einem verstreckten Material, regelmäßig Polyamid.

Bei dem erfindungsgemäßen Interdentalreinigungselement sind erste und zweite Reinigungselemente in Bezug auf die Längsachse der stabförmigen Basis auf gleicher Höhe angeordnet. Die stabförmige Basis aus verdrillten Drahtelementen schafft zwischen den verdrillten Drahtelementen an diskreten Stellen Aufnahmeräume für die Reinigungselemente. Dadurch können Borstenfilamente und Reinigungselemente aus Zahnseidenfadenmaterial in Kombination an einer Position vorgesehen sein. So kann in einem durch die beiden verdrillten Drahtelemente gebildeten Auge zumindest ein erstes Reinigungselement und zumindest ein zweites Element gemeinsam vorgesehen sein. Es können zwischen ein und vier erste und zwischen ein und vier zweite Reinigungselemente in einem gemeinsamen Auge aufgenommen sein.

Üblicherweise werden die Reinigungselemente zunächst ohne besondere Konturierung an der stabförmigen Basis befestigt. Danach erfolgt das Trimmen der sich im Wesentlichen rechtwinklig zu der stabförmigen Basis erstreckenden Reinigungselemente. Diese werden so geschnitten, dass sich in der Seitenansicht des Interdentalreinigungselementes eine bestimmte Konturierung ergibt. Dabei kann die durch die Spitzen der Reinigungselemente gebildete Hüllfläche eine zylindrische oder eine kegel- bzw. kegelstumpfförmige sein. Das Trimmen muss nicht notwendigerweise rotationssymmetrisch erfolgen. Bevorzugt wird aber eine solche rotationssymmetrische Trimmung verwirklicht.

Es versteht sich von selbst, dass insbesondere der Zahnseidenfaden mit heutzutage bekannten Inhaltsstoffen, wie Geschmacksstoffen oder einer Beschichtung z.B. mit Fluoriden oder PTFE, vorgesehen sein kann.

Hinsichtlich der Halterung bzw. Befestigung des Interdentalreinigungselementes kann auf vorbekannte Ausgestaltungen zurückgegriffen werden. So kann das Interdentalreinigungselement einen Griffbereich ausbilden, der sich beispielsweise zwischen dem Daumen und dem Zeigefinger einer Hand halten lässt. Ebenso gut können an dem der stabförmigen Basis abgewandten befestigungsseitigen Ende Anschlussflächen für das Aufstecken des Interdentalreinigungselementes auf einen Griffstiel einer Interdentalzahnbürste ausgebildet sein.

## Patentansprüche

1. Interdentalreinigungselement mit einer stabförmigen Basis und im Wesentlichen rechtwinklig hiervon abgehenden Reinigungselementen, wobei erste und zweite Reinigungselemente an der Basis befestigt sind, das erste Reinigungselement ein Borstenfilament aus verstrecktem Kunststoff, z.B. PA, PBT, PE und PTFE, ist und das zweite Reinigungselement aus einem Zahnseidenfaden besteht, **dadurch gekennzeichnet, dass** die stabförmige Basis gegeneinander verdrillte Drahtelemente aufweist, die zwischen sich die ersten und zweiten Reinigungselemente klemmen, und dass in Bezug auf die Längsachse der stabförmigen Basis erste und zweite Reinigungselemente auf gleicher Höhe angeordnet sind.

## Claims

1. Interdental cleaning element comprising a rod-shaped base and cleaning elements extending therefrom substantially at right angles, wherein first and second cleaning elements are secured to the base, said first cleaning element being a bristle filament consisting of stretched plastic, e.g. PA, PBT, PE and PTFE, and the second cleaning element consisting of a dental floss thread, **characterized in that** the rod-shaped base comprises wire elements, which are twisted together and between which the first and second cleaning elements are clamped in position, and that, with respect to the longitudinal axis of the rod-shaped base, first and second cleaning elements are arranged on the same level.

## Revendications

1. Elément de nettoyage interdentaire comprenant une base en forme de tige et des éléments de nettoyage qui en sont issus sensiblement de manière perpendiculaire, dans lequel des premier et second éléments de nettoyage sont fixés à la base, le premier élément de nettoyage est un filament de poils de brosse en matière plastique étirée, par exemple en PA, PBT, PE et PTFE, et le deuxième élément de nettoyage est constitué d'un matériau sous forme de fil de soie dentaire,
**caractérisé en ce que** la base en forme de tige comporte des éléments de fil mutuellement torsadés, qui enserrent entre eux les premier et second éléments de nettoyage, et **en ce que** les premier et second éléments de nettoyage sont agencés à la même hauteur par rapport à l'axe longitudinal de la base en forme de tige.
